# EUROPÄISCHE PATENTSCHRIFT

(11) **EP 0 707 436 B1**
(45) Veröffentlichungstag und Bekanntmachung des Hinweises auf die Patenterteilung: **01.03.2000**
(21) Anmeldenummer: 95115564.7
(22) Anmeldetag: 02.10.1995
(51) Int. Cl.: H05B 39/04, H02M 7/5383

(54) **Schaltungsanordnung zum Betreiben von Glühlampen**
Circuit for operating incandescent lamps
Circuit pour alimenter des lampes à incandescence

(30) Priorität: 12.10.1994 DE 4436465
(43) Veröffentlichungstag der Anmeldung: 17.04.1996
(73) Patentinhaber: Patent-Treuhand-Gesellschaft für elektrische Glühlampen mbH, 81543 München (DE)
(72) Erfinder: Lecheler, Reinhard, D-86633 Neuburg an der Donau (DE)

(56) Entgegenhaltungen:
- DE-A- 3 403 129
- DE-A- 4 011 742
- DE-A- 4 318 995
- FR-A- 2 627 342

## Beschreibung

Die Erfindung betrifft Schaltungsanordnungen zum Betreiben von Glühlampen, insbesondere von Niedervolt-Halogenglühlampen gemäß dem Oberbegriff des Anspruchs 1.

Diese Art von Schaltungsanordnungen enthält als Hauptbestandteil einen selbsterregten stromrückgekoppelten Wechselrichter in Halbbrückenschaltung, der die niederfrequente Netzspannung in eine hochfrequente Spannung zerhackt. Diese wird mit Hilfe eines Leistungsübertragers auf die Niederspannung der zu verwendenden Halogenglühlampen transformiert, z.B. 6, 12 oder 24 V. Solche Schaltungsanordnungen werden deshalb auch als elektronische Transformatoren oder elektronische Konverter bezeichnet.

Der freischwingende Wechselrichter wird durch einen rückgekoppelten Anteil des Ausgangsstromes gesteuert. Nach Ausschalten der Netzspannung ist deshalb für eine erneute Inbetriebnahme ein Steuerimpuls erforderlich, der die HF-Schwingung des Wechselrichters initiiert. Gewöhnlich enthalten elektronische Konverter einen Start- oder Triggergenerator, der diese Aufgabe übernimmt. Die detaillierte Funktionsweise elektronischer Konverter ist beispielsweise in der EP-PS 264 765 und der DE-OS 40 11 742 offenbart.

Üblicherweise wird der Strom zur Ansteuerung der Schalttransistoren der Brückenschaltung mit Hilfe eines separaten Steuerübertragers aus dem Lastkreis rückgekoppelt. Nachteilig ist hierbei allerdings die Abhängigkeit des Ansteuerstroms von der an der Sekundärseite des Leistungsübertragers angeschlossenen Last. Bei fehlender Last beispielsweise fließt im Lastkreis nur ein relativ kleiner Magnetisierungsstrom durch die Primärwicklung des Leistungsübertragers. Um auch für kleine Anschlußleistungen eine stabile Ansteuerung durch den Steuertransformator sicherzustellen, ist eine gezielte Optimierung der Schaltungsdimensionierung erforderlich. Dies hat wiederum ein mit zunehmender Leistungsaufnahme einhergehendes unerwünschtes Absinken der Arbeitsfrequenz des Wandlers zur Folge sowie hohe Transistorverluste. Diesem Dilemma wird bisher z.B. dadurch begegnet, daß zur Abdeckung eines weiten Leistungsbereiches mehrere Geräte unterschiedlicher Dimensionierung angeboten werden. Außerdem werden die maximal zulässigen Anschlußleistungen der Geräte mit kleiner minimaler Anschlußleistung niedriger festgelegt, als es durch die Belastbarkeit der verwendeten Bauteile tatsächlich erforderlich wäre. Dies hat allerdings einen beträchtlichen zusätzlichen Aufwand an Planung, Lagerhaltung und schließlich Kosten für Hersteller und Kunden zur Folge.

Aufgabe der Erfindung ist es, diesen Nachteil zu vermeiden und eine Schaltungsanordnung anzugeben, die mit möglichst wenig Bauteilen und dadurch kostengünstig einem Absinken der Arbeitsfrequenz des Wandlers im oberen Nennlastbereich entgegenwirkt und somit eine Ausweitung des effizient nutzbaren Bereichs der Anschlußleistung der Schaltungsanordnung ermöglicht.

Diese Aufgabe wird erfindungsgemäß durch die kennzeichnenden Merkmale des Anspruchs 1 gelöst. Weitere vorteilhafte Ausführungen der Erfindung sind in den Unteransprüchen erläutert.

Erfindungsgemäß beinhaltet der Konverter eine mit einem Halbbrückenwandler verbundene Frequenzanpaßschaltung, bestehend aus einer Reihenschaltung einer Drossel und eines Widerstandes sowie aus einem mit dem Verbindungspunkt zwischen Drossel und Widerstand kontaktierten Abzweigkondensator. Der von der Reihenschaltung abgewandte Anschluß des Abzweigkondensators ist mit dem Fußpunkt des mit dem Pluspol des Gleichrichters verbundenen Halbbrückenkondensators kontaktiert. Die Reihenschaltung ist im wesentlichen parallel zur Basis-Emitter-Diode des mit dem Minuspol des Gleichrichters - dies ist im folgenden das Bezugspotential - verbundenen zweiten Halbbrückentransistors geschaltet. Dabei ist der drosselseitige Anschluß der Reihenschaltung mit der Basis und der widerstandsseitige Anschluß mit dem Emitter - ggf. über weitere Bauteile für die Ansteuerung des Transistors, z.B. Vorwiderstände - verbunden. Dadurch ist die Reihenschaltung ebenfalls parallel zur mit der Basis des zweiten Halbbrückentransistors verbundenen Sekundärwicklung des Steuerübertragers geschaltet.

In einer Variante ist ein zusätzlicher Kondensator mit dem Fußpunkt des ersten Halbbrückenkondensators einerseits und dem Bezugspotential andererseits verbunden. Dieser wirkt im wesentlichen als zweiter Halbbrückenkondensator. Durch diese Entkopplung zwischen der Funktion des Abzweigkondensators und des zweiten Halbbrückenkondensators gewinnt man einen zusätzlichen Freiheitsgrad für die Dimensionierung der Bauelemente der Frequenzanpaßschaltung und für die Abstimmung der Halbbrücke auf eine gewünschte Betriebsfrequenz. Diesem Vorteil stehen die zusätzlichen Kosten für den Kondensator gegenüber.

Die Funktion der Frequenzanpaßschaltung - Erhöhung der Arbeitsfrequenz mit zunehmender Anschlußlast - beruht im wesentlichen auf einer entsprechenden Zunahme des Drosselstroms. Ermöglicht wird dies durch die gezielte Kontaktierung des Verbindungspunktes zwischen Drossel und Widerstand über einen Abzweigkondensator mit dem Fußpunkt des mit dem Pluspol der Gleichrichterschaltung verbundenen Halbbrückenkondensators. Dadurch wird nämlich erreicht, daß sich während der Leitendphase des zweiten Halbbrückentransistors der Abzweigkondensator über den Widerstand entlädt. Dieser Entladestrom bewirkt am Verbindungspunkt ein negatives Potential. Mit zunehmender Last nimmt der jeweilige Lade- bzw. Entladestrom und folglich auch der Betrag des negativen Potentials zu. Dadurch wiederum wird ein zunehmender Anteil des durch die entsprechende Sekundärwicklung des Steuerübertragers fließenden Steuerstromes des zweiten Halbbrückentransistors über die Drossel abgezweigt.

Die Zunahme des Drosselstroms führt zu den drei folgenden unmittelbaren Effekten in bezug auf den zweiten Halbbrückentransistor: 1. Abnahme des Verhältnisses zwischen Basis- und Kollektorstrom, 2. Verkürzung der Ansteuerphase mit positivem Basisstrom und 3. Zunahme des negativen Basisstroms während der darauf folgenden Ausräumphase. Alle drei Effekte bewirken eine Verkürzung der Einschaltzeit des zweiten Halbbrückentransistors und folglich eine Erhöhung der Arbeitsfrequenz. Aufgrund der induktiven Kopplung zwischen den beiden Sekundärwicklungen des Steuerübertragers wird auch der erste Halbbrückentransistor in gleicher Weise angesteuert, d.h. synchron zum zweiten Halbbrückentransistor.

Der Anteil des Drosselstroms bei einer Anschlußlast ist im wesentlichen durch die Dimensionierung von Drossel, Widerstand und Abzweigkondensator beeinflußbar.

Geeignete Werte für die Drossel und den Widerstand liegen im Bereich zwischen ca. 1 µH und 100 µH bzw. im Bereich zwischen ca. 0,1 Ω und 10 Ω. Besonders bewährt haben sich einige µH bis einige Zehn µH, typisch im Bereich zwischen ca. 10 µH und 30 µH bzw. einige Zehntel Ω bis einige Ω, typisch im Bereich zwischen ca. 0,3 Ω und 3 Ω. Der Kapazitätswert des Abzweigkondensators ist vorteilhaft in der Größenordnung des Kapazitätswerts des Halbbrückenkondensators, insbesondere können beide Werte auch gleich sein.

Die Erfindung wird anhand der nachfolgenden Ausführungsbeispiele näher erläutert. Es zeigen
- Figur 1: ein Prinzipschaltbild eines erfindungsgemäßen elektronischen Konverters mit einer Frequenzanpaßschaltung für den Betrieb von Niedervolt-Halogenglühlampen,
- Figur 2: ein Ausführungsbeispiel einer erfindungsgemäßen Schaltungsanordnung für den Betrieb von Niedervolt-Halogenglühlampen.

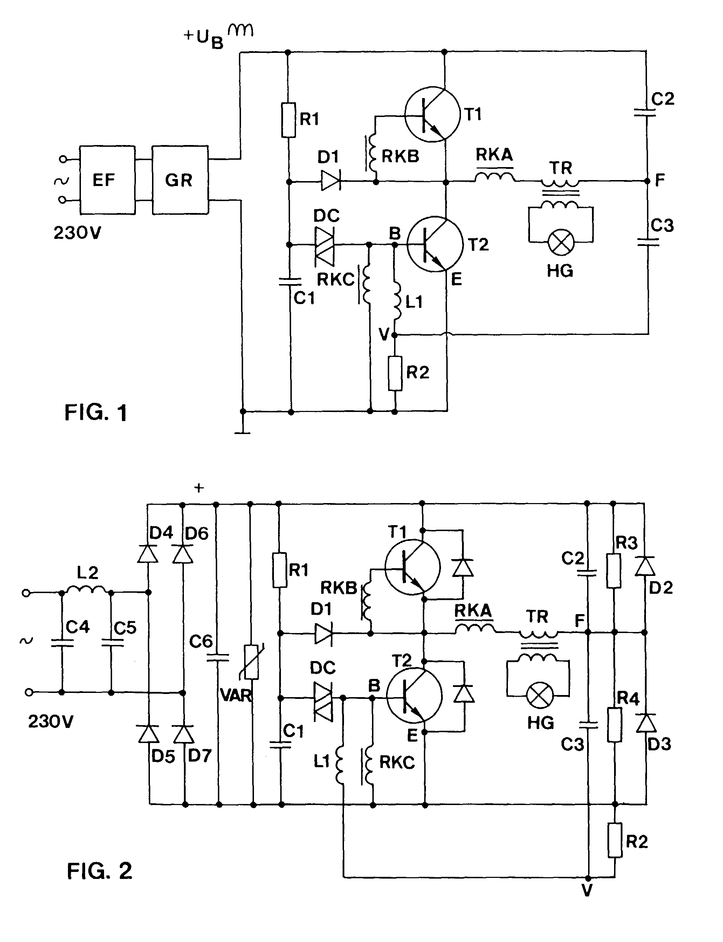

In Figur 1 ist ein Prinzipschaltbild eines erfindungsgemäßen elektronischen Konverters für Niedervolt-Halogenglühlampen dargestellt, bestehend aus einem Eingangsfilter EF zur Unterdrückung von Gegentakt-Störströmen, einem Gleichrichter GR, dessen Minuspol mit dem Massepotential der Schaltung verbunden ist, einem Triggergenerator, bestehend aus dem Widerstand R1, dem Ladekondensator C1 und dem Diac DC, einem selbsterregten stromrückgekoppelten Halbbrückenwandler - er besteht im wesentlichen aus den beiden Halbbrückentransistoren T1,T2, dem Halbbrückenkondensator C2 und dem Steuertransformator RKA-RKC für die Stromrückkopplung -, einem Leistungsübertrager TR, an dessen Sekundärwicklung eine Niedervolt-Halogenglühlampe HG betrieben wird, sowie einer Frequenzanpaßschaltung. Die Frequenzanpaßschaltung besteht aus einer Reihenschaltung der Drossel L1 und dem Widerstand R2 sowie aus dem Abzweigkondensator C3, der mit dem Verbindungspunkt V zwischen Drossel L1 und Widerstand R2 einerseits und dem Fußpunkt F des mit dem Pluspol des Gleichrichters verbundenen Halbbrückenkondensators C2 andererseits kontaktiert ist und gleichzeitig als zweiter Halbbrückenkondensator dient. Der drosselseitige Anschluß der Reihenschaltung ist im Punkt B mit der Basis und der widerstandsseitige Anschluß ist im Punkt E mit dem Emitter des mit dem Massepotential kontaktierten Halbbrückentransistors T2 verbunden.

Die Auslegung von Eingangsfiltern ist z.B. in H.-J. Meyer, "Stromversorgungen für die Praxis", Vogel Buchverlag, Würzburg, 1989, S. 115-116 beschrieben. Der Gleichrichter GR besteht im wesentlichen aus einer Diodenvollbrücke (siehe z.B. W. Hirschmann und A. Hauenstein, "Schaltnetzteile", Siemens AG, 1990, S. 102) und wandelt die Wechselspannung des Netzes in eine pulsierende Gleichspannung +*U*_{*B*}. Der negative Pol des Gleichrichters ist im folgenden das Bezugspotential. Die beiden Halbbrückentransistoren T1,T2 werden abwechselnd durch die Spannungssignale der beiden Sekundärwicklungen RKB bzw. RKC des Steuerübertragers RKA-RKC durchgeschaltet. Sie schließen damit den Stromkreis über die Primärwicklungen von Steuerübertrager RKA-RKC und Leistungsübertrager TR, sowie über den Brücken- bzw. Abzweigkondensator C2, C3. Der Start der Schwingung, etwa nach einer vorübergehenden Unterbrechung der Netzspannung erfolgt, wenn der Ladekondensator C1 die Zündspannung des Diacs DC erreicht hat und folglich an der Basis des Halbbrückentransistors T2 ein Steuersignal anliegt. Während der Halbbrückenwandler schwingt, wird der Ladekondensator C1 des Triggergenerators im wesentlichen über die Diode D1 und den Halbbrückentransistor T2 entladen. Dadurch wird verhindert, daß während der Leitendphase des Halbbrückentransistors T2 ein unerwünschtes Triggersignal erzeugt und dem Steuersignal der Sekundärwicklung RKC des Steuerübertragers RKA-RKC überlagert wird.

Während der Leitendphase des Halbbrückentransistors T2 entlädt sich der Abzweigkondensator C3 über den Widerstand R2 und erzeugt dadurch im Verbindungspunkt V ein negatives Potential. Daher wird ein größerer Teil des Steuerstroms, der durch die mit Massepotential verbundene Sekundärwicklung RKC fließt, über die Drossel L1 und den Abzweigkondensator C3 abgezweigt. Während der Leitendphase des Halbbrückentransistors T1 lädt sich der Abzweigkondensator C3 wieder auf, wobei die daraus resultierende Wechselspannungsamplitude mit der Anschlußlast zunimmt. Folglich nimmt auch der Betrag des negativen Potentials des Verbindungspunkts V mit der Anschlußlast zu. Die dadurch verursachte Verkürzung der Leitendphase des Halbbrückentransistors T2 überträgt sich über die induktive Kopplung zwischen den beiden Sekundärwicklungen RKB, RKC des Steuerübertragers RKA-RKC auf die Leitendphase des Halbbrückentransistors T1.

Figur 2 zeigt das Schaltbild eines Ausführungsbeispiels eines elektronischen Konverters für 12 V-Halogenglühlampen mit einer maximalen Leistungsaufnahme von 60 W. Im Netzeingang der Schaltung ist ein Collinsfilter zur Funkentstörung geschaltet, bestehend aus den beiden Kondensatoren C4, C5 im Querzweig und der Drossel L2 im Längszweig, gefolgt von einem Brückengleichrichter - sein Minuspol ist im folgenden das Bezugspotential -, bestehend aus den Dioden D4-D7, dessen Ausgang einen parallel geschalteten Siebkondensator C6 und einen Varistor VAR als Überspannungsschutz aufweist. Danach folgt ein selbstschwingender stromrückgekoppelter Halbbrückenwandler, bestehend im wesentlichen aus den beiden Halbbrückentransistoren T1, T2 mit integrierten Rückflußdioden, einem mit dem Pluspol des Brückengleichrichters verbundenen Halbbrückenkondensator C2, dem eine Diode D2 und ein Widerstand R3 parallel geschaltet sind, dem Leistungsübertrager TR, an dessen Sekundärwicklung eine 12V Halogenglühlampe angeschlossen ist sowie aus dem Steuerübertrager RKA bis RKC, dessen Sekundärwicklungen RKB, RKC mit den Basisanschlüssen der Halbbrückentransistoren T1 bzw. T2 verbunden sind. Der Fußpunkt F des Halbbrückenkondensators C2 ist mit einer Parallelschaltung, bestehend aus der Diode D3 und dem Widerstand R4 sowie mit dem Abzweigkondensator C3 verbunden. Der Halbbrückenwandler wird mittels eines herkömmlichen Triggergenerators gestartet, der aus dem Widerstand R1, dem Ladekondensator C1 sowie dem Diac DC besteht. Die Diode D1 verhindert die Entstehung von unerwünschten Triggerimpulsen während der Halbbrückenwandler schwingt.

Zwischen der Basis B und dem Emitter E des zweiten, mit dem Bezugspotential verbundenen Halbbrückentransistors T2 ist eine Reihenschaltung, bestehend aus der Drossel L1 und dem Widerstand R2 geschaltet. Der Verbindungspunkt V zwischen Drossel L1 und Widerstand R2 ist mit dem Abzweigkondensator C3 verbunden, der zusammen mit der Reihenschaltung L1, R2 die Frequenzanpaßschaltung bildet und außerdem zusätzlich die Funktion des zweiten Halbbrückenkondensators übernimmt. Über den Abzweigkondensator C3 wird während der Leitendphase des zweiten Halbbrückentransistors T2 ein Teil des Steuerstroms abgezweigt, der durch die mit dem Bezugspotential verbundene Sekundärwicklung RKC fließt. Die weitere Funktion der Frequenzanpaßschaltung entspricht derjenigen, der bereits in der Beschreibung zu Figur 1 erläuterten Frequenzanpaßschaltung.

In der nachfolgenden Tabelle sind die verwendeten Bauteile aufgelistet. Damit wird ein effizienter Betrieb der Schaltung in einem Anschlußleistungsbereich zwischen 10 W und 60 W erzielt. Ohne Frequenzanpaßschaltung beträgt der Anschlußleistungsbereich nur zwischen 20 W und 60 W. Dieser Vergleich belegt eindrucksvoll die vorteilhafte Wirkung der Erfindung.

**Tabelle:**

| Bauteileliste der Schaltung aus Figur 2. | |
|---|---|
| R1 | 270 kΩ |
| R2 | 0,5 Ω |
| R3, R4 | 360 kΩ |
| C1 | 8,2 nF; 100 V |
| C2, C3 | 15 nF; 400 V |
| C4, C5 | 100 nF; 250 V~ |
| C6 | 10 nF; 400 V |
| D1, D4-D7 | 1N4007 |
| D2, D3 | 1N4937 |
| DC | Diac, 32V |
| L1 | BC, 18 µH |
| L2 | EFD15, 5,3 mH |
| RKA-RKC | R8/4/3,8 1/5/5 Windungen |
| TR | ER35/5/14 67/7 Windungen |
| T1, T2 | BUL381D |
| VAR | 10mm, 250 V ~ |

## Patentansprüche

1. Schaltungsanordnung zum Betreiben einer oder mehrerer parallel geschalteter Glühlampen, insbesondere Niedervolt-Halogenglühlampen, mit
- einer Gleichrichterschaltung (GR; D4-D7, C6, VAR),
- einem zwei Halbbrückentransistoren (T1, T2) aufweisenden und über einen Steuerübertrager (RKA-RKC) stromrückgekoppelten selbstschwingenden Halbbrückenwandler, wobei der zweite Halbbrückentransistor (T2) mit dem Minuspol der Gleichrichterschaltung (GR; D4-D7, C6, VAR) direkt verbunden ist und der Steuerübertrager (RKA-RKC) aus einer Primär- (RKA) und zwei Sekundärwicklungen (RKB, RKC) besteht,
- einem mit dem Pluspol der Gleichrichterschaltung (GR; D4-D7, C6, VAR) direkt verbundenen Halbbrückenkondensator (C2),
- einem Leistungsübertrager (TR), dessen Primärwicklung über die Primärwicklung (RKA) des Steuerübertragers mit dem Verbindungspunkt der beiden Halbbrückentransistoren (T1; T2) einerseits und dem Fußpunkt (F) des Halbbrückenkondensators (C2) andererseits kontaktiert ist und an dessen Sekundärwicklung die Glühlampe(n) (HG) angeschlossen ist (sind),
dadurch gekennzeichnet, daß die Schaltungsanordnung zusätzlich eine Frequenzanpaßschaltung enthält, bestehend aus einer Reihenschaltung einer Drossel (L1) und eines Widerstandes (R2) sowie aus einem am Verbindungspunkt (V) zwischen Drossel (L1) und Widerstand (R2) einerseits und am Fußpunkt (F) des Halbbrückenkondensators (C2) andererseits angeschlossenen Abzweigkondensator (C3), wobei der drosselseitige Anschluß der Reihenschaltung mit der Basis (B) und der widerstandsseitige Anschluß mit dem Emitter (E) des zweiten Halbbrückentransistors (T2) verbunden ist.

2. Schaltungsanordnung nach Anspruch 1, dadurch gekennzeichnet, daß der Wert des Widerstandes (R2) im Bereich zwischen ca. 0,1 Ω und 10 Ω liegt.

3. Schaltungsanordnung nach Anspruch 2, dadurch gekennzeichnet, daß der Wert des Widerstandes (R2) bevorzugt im Bereich zwischen ca. 0,3 Ω und 3 Ω liegt.

4. Schaltungsanordnung nach Anspruch 1, dadurch gekennzeichnet, daß der Wert der Drossel (L1) im Bereich zwischen ca. 1 µH und 100 µH liegt.

5. Schaltungsanordnung nach Anspruch 4, dadurch gekennzeichnet, daß der Wert der Drossel (L1) bevorzugt im Bereich zwischen ca. 10 µH und 30 µH liegt.

6. Schaltungsanordnung nach Anspruch 1, dadurch gekennzeichnet, daß der Wert des Abzweigkondensators (C3) in etwa demjenigen des Halbbrückenkondensators (C2) entspricht.

7. Schaltungsanordnung nach Anspruch 1, dadurch gekennzeichnet, daß der Widerstand (R2) in SMD-Technik realisiert ist.

8. Schaltungsanordnung nach Anspruch 1, dadurch gekennzeichnet, daß die Drossel (L1) als Stabkerndrossel realisiert ist.

9. Schaltungsanordnung nach Anspruch 1, dadurch gekennzeichnet, daß die Schaltungsanordnung zusätzlich einen zweiten Halbbrückenkondensator enthält, der mit dem Fußpunkt (F) des ersten Halbbrückenkondensators (C2) einerseits und mit dem Minuspol der Gleichrichterschaltung (GR; D4-D7, C6, VAR) andererseits verbunden ist.

10. Schaltungsanordnung nach Anspruch 1, dadurch gekennzeichnet, daß die Schaltungsanordnung zusätzlich je eine Basisbeschaltung für die Halbbrückentransistoren (T1, T2) enthält.

11. Schaltungsanordnung nach Anspruch 1, dadurch gekennzeichnet, daß die Schaltungsanordnung zusätzlich je eine Emitterbeschaltung für die Halbbrückentransistoren (T1, T2) enthält.

12. Schaltungsanordnung nach Anspruch 10 oder 11, dadurch gekennzeichnet, daß die Beschaltungen eines oder mehrere der Bauelemente Widerstand, Diode, Kondensator und Spule enthält.

## Claims

1. Circuit arrangement for operating one or more parallel-connected incandescent lamps, in particular low-voltage halogen incandescent lamps, having
- a rectifier circuit (GR; D4-D7, C6, VAR),
- a self-oscillating half-bridge converter having two half-bridge transistors (T1, T2) and current feedback via a control transformer (RKA-RKC), the second half-bridge transistor (T2) being directly connected to the negative pole of the rectifier circuit (GR; D4-D7, C6, VAR), and the control transformer (RKA-RKC) comprising a primary winding (RKA) and two secondary windings (RKB, RKC),
- a half-bridge capacitor (C2) directly connected to the positive pole of the rectifier circuit (GR; D4-D7, C6, VAR),
- a power transformer (TR) whose primary winding makes contact, on the one hand, with the tie point of the two half-bridge transistors (T1; T2) via the primary winding (RKA) of the control transformer and, on the other hand, with the low end (F) of the half-bridge capacitor (C2), and to whose secondary winding the incandescent lamp(s) (HG) is (are) connected,
characterized in that the circuit arrangement additionally contains a frequency-matching circuit comprising a series circuit of an inductor (L1) and a resistor (R2) as well as a branch capacitor (C3) which is connected, on the one hand, to the tie point (V) between the inductor (L1) and resistor (R2) and, on the other hand, to the low end (F) of the half-bridge, capacitor (C2), the inductor-side terminal of the series circuit being connected to the base (B) and the resistor-side terminal being connected to the emitter (E) of the second half-bridge transistor (T2).

2. Circuit arrangement according to Claim 1, characterized in that the value of the resistor (R2) is in the range of between approximately 0.1 Ω and 10 Ω.

3. Circuit arrangement according to Claim 2, characterized in that the value of the resistor (R2) is preferably in the range of between approximately 0.3 Ω and 3 Ω.

4. Circuit arrangement according to Claim 1, characterized in that the value of the inductor (L1) is in the region of between approximately 1 µH and 100 µH.

5. Circuit arrangement according to Claim 4, characterized in that the value of the inductor (L1) is preferably in the region of between approximately 10 µH and 30 µH.

6. Circuit arrangement according to Claim 1, characterized in that the value of the branch capacitor (C3) corresponds approximately to that of the half-bridge capacitor (C2).

7. Circuit arrangement according to Claim 1, characterized in that the resistor (R2) is implemented using SMD technology.

8. Circuit arrangement according to Claim 1, characterized in that the inductor (L1) is implemented as a bar-core inductor.

9. Circuit arrangement according to Claim 1, characterized in that the circuit arrangement additionally contains a second half-bridge capacitor which is connected, on the one hand, to the low end (F) of the first half-bridge capacitor (C2) and, on the other hand, to the negative pole of the rectifier circuit (GR; D4-D7, C6, VAR).

10. Circuit arrangement according to Claim 1, characterized in that the circuit arrangement additionally contains in each case a base circuit for the half-bridge transistors (T1, T2).

11. Circuit arrangement according to Claim 1, characterized in that the circuit arrangement additionally contains in each case an emitter circuit for the half-bridge transistors (T1, T2).

12. Circuit arrangement according to Claim 10 or 11, characterized in that the circuits contain one or more of the components of resistor, diode, capacitor and coil.

## Revendications

1. Montage pour alimenter une ou plusieurs lampes à incandescence montées en parallèle, notamment des lampes à incandescence à halogène à basse tension, comportant
- un circuit (GR ; D4 à D7, C6, VAR) redresseur,
- un transformateur à demi-pont autohétérodyne, comportant deux transistors (T1, T2) à demi-pont en réaction de courant par l'intermédiaire d'un transformateur (RKA à RKC) de commande, le deuxième transistor (T2) à demi-pont étant relié directement au pôle négatif du circuit (GR ; D4 à D7, C6, VAR) redresseur et le transformateur (RKA à RKC) de commande étant constitué d'un enroulement (RKA) primaire et de deux enroulements (RKB, RKC) secondaires,
- un condensateur (C2) à demi-pont relié directement au pôle positif du circuit (GR ; D4 à D7, C6, VAR) redresseur,
- un transformateur (TR) de puissance dont l'enroulement primaire est contacté au point de liaison des deux transistors (T1 ; T2) à demi-pont d'une part et au point (F) d'entrée du condensateur (C2) à demi-pont d'autre part et à l'enroulement secondaire duquel la lampe (HG) à incandescence est raccordée ou les lampes à incandescence sont raccordées,
caractérisé en ce que le montage contient de plus un circuit d'adaptation de fréquence, constitué d'un circuit série, d'une bobine (L1) et d'une résistance (R2) ainsi que d'un condensateur (C3) de dérivation raccordé d'une part au point (V) de liaison entre la bobine (L1) et la résistance (R2) et au point (F) d'entrée du condensateur (C2) à demi-pont d'autre part, la borne du circuit série située côté bobine étant reliée à la base (B) du deuxième transistor (T2) à demi-pont et la borne située côté résistance étant reliée à l'émetteur (E) du deuxième transistor (T2) à demi-pont.

2. Montage suivant la revendication 1, caractérisé en ce que la valeur de la résistance (R2) est comprise dans l'intervalle entre environ 0,1 Ω et 10 Ω.

3. Montage suivant la revendication 2, caractérisé en ce que la valeur de la résistance (R2) est comprise de préférence dans l'intervalle entre environ 0,3 Ω et 3 Ω.

4. Montage suivant la revendication 1, caractérisé en ce que la valeur de la bobine (L1) est comprise dans l'intervalle entre environ 1 µH et 100 µH.

5. Montage suivant la revendication 4, caractérisé en ce que la valeur de la bobine (L1) est comprise de préférence dans l'intervalle entre environ 10 µH et 30 µH,

6. Montage suivant la revendication 1, caractérisé en ce que la valeur du condensateur (C3) de dérivation correspond à peu près à celle du condensateur (C2) à demi-pont.

7. Montage suivant la revendication 1, caractérisé en ce que la résistance (R2) est réalisée en technologie des composants montés en surface.

8. Montage suivant la revendication 1, caractérisé en ce que la bobine (L1) est réalisée en bobine à noyau en forme de barreau.

9. Montage suivant la revendication 1, caractérisé en ce que le montage contient de plus un deuxième condensateur à demi-pont qui est relié d'une part au point (F) d'entrée du premier condensateur (C2) à demi-pont et d'autre part au pôle négatif du circuit (GR ; D4 à D7, C6, VAR) redresseur.

10. Montage suivant la revendication 1, caractérisé en ce que le montage contient de plus chaque fois un câblage à base pour les transistors (T1, T2) à demi-pont.

11. Montage suivant la revendication 1, caractérisé en ce que le montage contient de plus chaque fois un câblage à émetteur pour les transistors (T1, T2) à demi-pont.

12. Montage suivant la revendication 10 ou 11, caractérisé en ce que les câblages contiennent un ou plusieurs des composants : résistance, diode, condensateur et bobine.
